# EUROPÄISCHE PATENTSCHRIFT

(11) **EP 0 390 057 B1**
(45) Veröffentlichungstag und Bekanntmachung des Hinweises auf die Patenterteilung: **18.08.1993**
(21) Anmeldenummer: 90105771.1
(22) Anmeldetag: 27.03.1990
(51) Int. Cl.: F16L 23/08, F01N 7/08, F01N 7/18, B60K 13/04

(54) **Zum Austausch eines Rohrteiles geeigneter Rohrstrang, Verfahren zum Austausch eines solchen Rohrteils und nach dem Verfahren hergestellter Rohrstrang**
Suitable train of pipes for replacement of a pipe section, method for replacement of such pipe section and with this method the production of train of pipes
Ligne de tubes approprié pour le remplacement d'une pièce de tube, méthode de remplacement de cette pièce de tube et ligne de tubes produite avec cette méthode

(30) Priorität: 31.03.1989 DE 3910387
(43) Veröffentlichungstag der Anmeldung: 03.10.1990
(73) Patentinhaber: DAIMLER-BENZ AKTIENGESELLSCHAFT, 70327 Stuttgart (DE)
(72) Erfinder: Ulrich, Hans, D-7430 Metzingen (DE); Stotz, Manfred, Dipl.-Ing., D-7307 Aichwald 2 (DE); Kleineberg, Wolfgang, Dipl.-Ing., D-7260 Calw 4 (DE); Bockel, Heinrich, Ing., D-7052 Schwaikheim (DE)

(56) Entgegenhaltungen:
- DE-A- 3 444 840
- FR-A- 2 537 694

## Beschreibung

Die Erfindung bezieht sich auf einen zum Austausch eines Rohrteils geeigneten einstückigen Rohrstrang mit den im Oberbegriff des Patentanspruches 1 genannten Merkmalen, auf ein Verfahren zum Austausch eines solchen Rohrteils sowie auf einen nach diesem Verfahren hergestellten Rohrstrang.

Ein zum Austausch eines Rohrteils geeigneter einstückiger Rohrstrang mit den im Oberbegriff des Patentanspruches 1 genannten Merkmalen ist in der älteren Patentanmeldung EP-A-0 385 898 beschrieben. Mit dem Rohrstrang ist ein gesonderter Ring mechanisch verbunden, der außen kegelstumpfförmige Flächen trägt. Zum Austausch eines Rohrteils kann der Rohrstrang unmittelbar neben dem Ring aufgeschnitten werden und ein neues Rohrteil mit einem aufgeweiteten Endstück an dem Ring angesetzt und mit diesem verspannt werden. Bei dem beschriebenen Rohrstrang muß bereits bei seiner Erstherstellung auf jedes Rohr ein Ring aufgebracht und in aufwendiger Weise mit diesem verbunden werden, wodurch nach dem Auftrennen des Rohrstranges eine weitere, nicht durch eine Dichtung gesicherte Dichtstelle zwischen Ring und Rohrstrang entsteht.

Aus der FR-A-25 37 634 und der US-A 1,959,630 sind mehrteilige Rohrstränge bekannt, die mit Hilfe von Schnellverschlüssen aus einzelnen Rohrteilen zusammengesetzt sind, die nach außen gerichtete zueinander symmetrische Endstücke aufweisen, zwischen denen keilförmige Dichtringe eingesetzt sind. Bei diesen bekannten Rohrsträngen fallen bereits vor der erstmaligen Verwendung die Kosten für den Zusammenbau der einzelnen Rohrteile und die dafür notwendigen Hilfsmittel wie Dichtring und Schnellverschluß an. Durch die genannten Schriften sind das Auftrennen eines einstückigen Rohrstranges und der Austausch von Rohrteilen nicht bekannt.

Der Erfindung liegt die Aufgabe zugrunde, einen Rohrstrang der eingangs genannten Art zu schaffen, der auf den Austausch eines Rohrteiles vorbereitet ist ohne Verbindung mit einem weiteren, für den Anschluß eines neuen Rohrteiles vorgesehenen Teil.

Diese Aufgabe ist bei einem gattungsgemäßen Rohrstrang durch die kennzeichnenden Merkmale des Patentanspruches 1 gelöst.

Bei dem erfindungsgemäß ausgebildeten Rohrstrang erfolgt die Vorbereitung auf den Austausch eines Rohrteiles ausschließlich durch eine Aufweitung des einstückigen Rohrstranges selbst, wodurch ein Verbindungsteil für ein neues Rohrteil geschaffen wird. Das Aufbringen und Verbinden eines weiteren Teils mit dem eigentlichen Rohrstrang entfällt, so daß auch eine zweite Dichtstelle nach dem Austausch eines Rohrteils vermieden wird.

Die Ausbildung des Rohrstranges nach dem Patentanspruch 2 erleichtert die Auftrennung des Rohrstranges erheblich, indem zur Auftrennung nur ein einfaches Werkzeug benötigt wird oder ganz auf dieses verzichtet werden kann, beispielsweise durch einfaches Abknicken und damit Abbrechen eines Rohrteils des Rohrstranges. Die Sollbruchstelle läßt sich besonders einfach herstellen durch eine Materialwegnahme am äußeren Umfang des Rohrstranges, so daß der Rohrstrang an dieser Stelle eine geringere Wandstärke aufweist als in seinen anderen Bereichen.

Eine besonders günstige Ausbildung des nach außen gerichteten Teils der Aufweitung ist im Patentanspruch 3 angegeben.

Mit dem gemäß Patentanspruch 4 ausgebildeten Rohrstrang wird ein leichter und sicherer Austausch jedes der beiden benachbarten Rohrteile ermöglicht, wobei die Durchtrennung jeweils derart erfolgt, daß das Zylinderteil der Aufweitung am aüszutauschenden Rohrteil verbleibt und damit nach dessen Entfernung zusätzlicher Platz für das Anlegen des neuen Rohrteils entsteht.

Bei dem im Patentanspruch 5 angegebenen Verfahren müssen nach dem Auftrennen des bereits beim Ersteinbau in der Form vorbereiteten einstückigen Rohrstranges und dem Ausbau des zu erneuernden Rohrteiles lediglich der Dichtring und das neue Rohrteil aneinandergesetzt und miteinander verspannt werden. Die geringen axialen Überschneidungen können leicht mit Hilfe von nachgiebigen Aufhängungen des Rohrstranges, beispielsweise am Fahrzeugboden, überwunden werden. Infolge des symmetrischen Aufbaus der Verbindung können stromauf oder stromab der Verbindung liegende Rohrteile in gleich guter Weise ausgetauscht werden. Es wird eine kurz bauende und gasdichte Verbindung erreicht, ohne daß ein Einstecken des stromauf liegenden Rohrteils in das stromab liegende Rohrteil erforderlich ist.

Durch das im Patentanspruch 6 angegebene Verfahren wird die Verspannung zwischen dem Dichtring und den beiden Rohrteilen und damit die Gasdichtheit weiter verbessert.

Bei einer Ausbildung eines Rohrstranges gemäß dem Patentanspruch 7 wird eine gute Zentrierung und Fixierung des Dichtringes gegenüber den beiden Rohrteilen und damit dieser Rohrteile zueinander ereicht.

Bei dem nach dem Patentanspruch 8 ausgebildeten Rohrstrang werden einerseits die Störung der Strömung im Rohrstrang und andererseits die Einwirkung, vor allem hinsichtlich Temperatur und Druck, des strömenden Mediums auf die Verbindung zwischen den Rohrteilen, insbesondere auf den Dichtring, gering gehalten.

Durch die Merkmale des Patentanspruchs 9 wird eine einfache Verdrehsicherung der Rohrteile und des Dichtringes zueinander geschaffen.

Im folgenden wird die Erfindung anhand eines in der Zeichnung dargestellten Ausführungsbeispiels näher erläutert. Dabei zeigt:
- Figur 1: einen als Abgasleitung einer Brennkraftmaschine ausgebildeten Rohrstrang mit zwei Schalldämpfern, von dem ein Rohrteil auszutauschen ist,
- Figur 2: eine Aufweitung im Rohrstrang der Figur 1 als Einzelheit in größerem Maßstab,
- Figur 3: eine gegenüber der Figur 2 geänderte Ausbildung der Aufweitung,
- Figur 4: den Rohrstrang der Figur 1 mit einem neuen Rohrteil in einem Teillängsschnitt,
- Figur 5: den Rohrstrang der Figur 4 in einem Querschnitt,
- Figur 6: den Rohrstrang der Figur 4 mit einer Verdrehsicherung in einem Teillängsschnitt und
- Figur 7: den Rohrstrang der Figur 6 in einem Querschnitt.

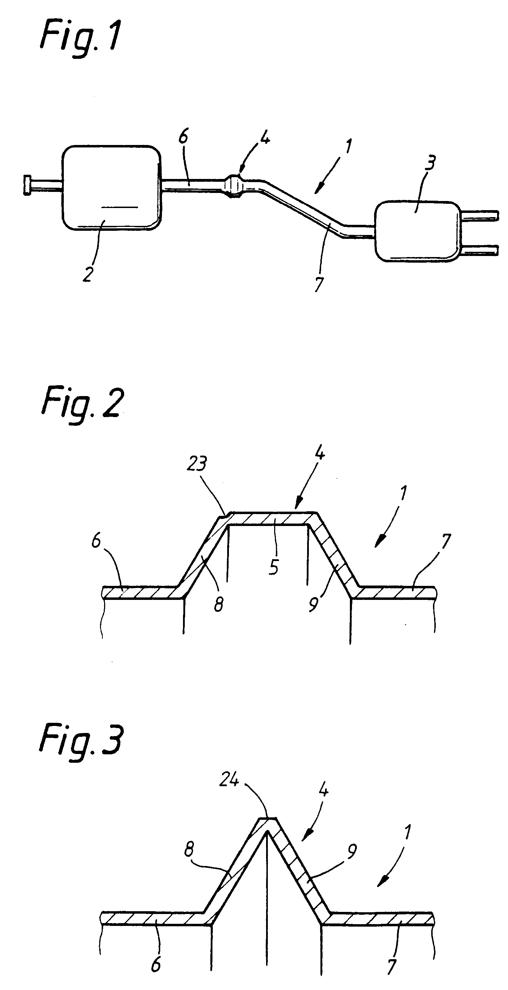

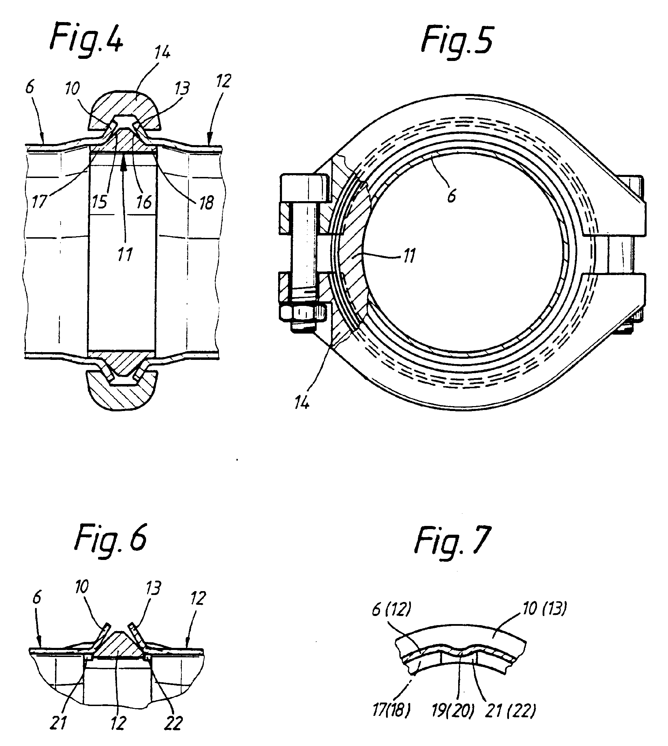

In der Abgasleitung 1 der nicht dargestellten Brennkraftmaschine sind ein Mittelschalldämpfer 2 und ein Nachschalldämpfer 3 angeordnet. Zwischen diesen Schalldämpfern 2 und 3 ist in der in diesem Bereich einstückig ausgebildeten Abgasleitung 1, wie in Figur 2 näher dargestellt ist, eine Aufweitung 4 angeordnet, die aus einem Zylinderteil 5 und zwei diesen mit den anschließenden Rohrteilen 6 und 7 der Abgasleitung 7 verbindenden Kegelstumpfteilen 8 und 9 besteht. Am Übergang zwischen dem Kegelstumpfteil 8 am Rohrteil 6 und den Zylinderteil 5 ist als Abtrennstelle eine Materialwegnahme vorgesehen, die im dargestellten Beispiel als eine Eindrehung 23 am äußeren Umfang des Rohrstanges 1 ausgebildet ist. An dem gleichfalls als Abtrennstelle ausgebildeten Übergang vom Zylinderteil 5 zum anderen Kegelstumpfteil 9 am Rohrteil 7 ist dagegen keine derartige Eindrehung vorgesehen, so daß zur Auftrennung des Rohrstanges 1 an dieser Stelle ein Werkzeug benötigt wird, wenn, wie unten näher beschrieben, das Rohrteil 6 ausgetauscht werden soll. Jedoch ist es selbstverständlich, daß auch diese Abtrennstelle als Sollbruchstelle ausgebildet sein kann. Soll nun der Nachschalldämpfer 3, beispielsweise wegen Korrosion, erneuert werden, so wird der Rohrstrang 1 durch einfaches Abknicken des Rohrteiles 7 und damit Aufbrechen an der Aufweitung 4 zwischen dem Zylinderteil 5 und dem dem verbleibenden Rohrteil 6 zugehörigen Kegelstumpfteil 8 aufgetrennt, so daß der Nachschalldämpfer 3 einschließlich dem Rohrteil 7 entfernt werden kann. Der Kegelstumpfteil 8 bildet nach einer einfachen Nacharbeit ein schräg nach außen gerichtetes Endstück 10 des verbleibenden Rohrteils 6 (Figur 4). An dieses wird seitlich ein Dichtring 11 angelegt, der im Querschnitt trapezförmig mit radial außen geringerer Breite als radial innen ausgebildet ist. An den Dichtring 11 wiederum wird seitlich ein neues Rohrteil 12 zusammen mit einem nicht dargestellten neuen Nachschalldämpfer angelegt, wobei der Rohrteil 12 ein zum Endstück 10 symmetrisches Endstück 13 aufweist.

Wie in Figur 3 dargestellt, kann die Aufweitung 4 auch aus zwei Kegelstumpfteilen 8, 9 bestehen, die an ihren größten Durchmessern unmittelbar miteinander verbunden sind. Hier läßt sich eine Solbruchstelle zwischen den beiden Kegelstumpfteilen 8, 9 besonders leicht herstellen, indem die durch die beiden Kegelstumpfteile 8, 9 gebildete umlaufende Spitze abgenommen wird, so daß hier eine zylinderförmige Außenkontur 24 entsteht. Bei dieser Form der Aufweitung 4 ist es zur Unterbringung eines im Querschnitt trapezförmigen Dichtringes 11 notwendig, das neue Rohrteil 12 um einen geringen Betrag kürzer auszubilden als das auszutauschende Rohrteil 7.

Der von den beiden Endstücken 10 und 13, die einen axialen Mindestabstand von etwa der radial äußeren Breite des Dichtringes 11 aufweisen, eingeschlossene, nach innen öffnende Winkel ist kleiner als der Keilwinkel des Dichtringes 11, so daß die Endstücke 10 und 13 vor dem Verspannen lediglich mit ihrem Fußbereich an dem Dichtring 11 anliegen. Durch Verspannen der beiden Endstücke 10 und 13 mittels einer Schraubschelle 14 legen sich die beiden Keilflächen 15 und 16 des Dichtringes 11 an die Innenflächen der Endstücke 10 und 13 an, so daß eine dichte Verbindung zwischen den beiden Rohrteilen 6 und 12 entsteht, ohne daß sich diese berühren.

Zur Lagesicherung des Dichtringes 11 gegenüber den beiden Rohrteilen 10 und 13 und damit auch dieser zueinander weist der Dichtring 11 an seinem radial inneren Bereich zwei Zentrierbunden 17 und 18 auf, an denen die Rohrteile 6 und 12 im Fußbereich der Endstücke 10 und 13 mit ihrer Innenseite anliegen. Um die Beeinflussung der Rohrströmung durch den Dichtring 11 und die Belastung des Dichtringes 11 durch das strömende Medium möglichst gering zu halten, sind die Rohrteile 6 und 12 im Bereich der Zentrierbunde 17 und 18 um etwa deren Dicke aufgeweitet.

Eine Verdrehsicherung des Dichtringes 11 gegenüber den Rohrteilen 6 und 12 und damit auch dieser zueinander wird dadurch erreicht, daß jeweils eine Eindrückung 19 und 20 im Fußbereich der Endstücke 10 und 13 in eine Ausnehmung 21 bzw. 22 in den Zentrierbunden 17 und 18 eingreift.

Wie leicht zu erkennen ist, bereitet es auch keine Schwierigkeiten, anstelle des Rohrteils 7 das Rohrteil 6 mit dem Mittelschalldämpfer 2 auszutauschen, das auch an seinem der Aufweitung 4 entgegengesetzten Ende an einem weiteren Rohrteil befestigt werden muß. Dazu wird die Aufweitung zwischen dem Zylinderteil 15 und dem dem Rohrteil 7 zugehörigen Kegelstumpfteil 9 aufgetrennt, der Mittelschalldämpfer 2 mitsamt dem zugehörigen Rohrteil 6 entfernt, ohne daß der Nachschalldämpfer 3 und das zugehörige Rohrteil 7 ausgebaut werden. Durch Anlegen eines Dichtringes und des neuen Rohrteiles mitsamt neuem Mittelschalldämpfer sowie deren Verspannen miteinander wird dann eine erneuerte Abgasleitung hergestellt, wobei die geringen auftretenden Überschneidungen beim Zusammenbau durch die Elastizitäten in den Aufhängungen der Abgasleitung überwunden werden können.

## Patentansprüche

1. Zum Austausch eines Rohrteils geeigneter Rohrstrang (1), der zur Abtrennung des auszutauschenden Rohrteils (6,7) auftrennbar ist, mit einem eine schräg nach außen gerichtete Fläche aufweisenden, der Trennstelle benachbarten Verbindungsteil (8,9),
**dadurch gekennzeichnet,**
daß das Verbindungsteil (8, 9) teil einer Aufweitung (4) des Rohrstranges ist, und daß der Rohrstrang einstückig ist.

2. Rohrstrang nach Anspruch 1,
**dadurch gekennzeichnet,**
daß die Abtrennstelle als Sollbruchstelle ausgebildet ist, insbesondere durch Materialwegnahme am äußeren Umfang des Rohrstranges.

3. Rohrstrang nach Ansprcuh 1 oder 2,
**dadurch gekennzeichnet,**
daß das nach außen gerichtete Teil als Kegelstumpfteil (8 oder 9) ausgebildet ist, an dessen größtem Durchmesser die Abtrennstelle angeordnet ist.

4. Rohrstrang nach einem der Ansprüche 1 bis 3,
**dadurch gekennzeichnet,**
daß die Aufweitung (4) aus einem Zylinderteil (5) und zwei diesen mit den anschließenden Rohrteilen (6, 7) verbindenden Kegelstumpfteilen (8, 9) besteht und daß je eine Abtrennstelle zwischen dem Zylinderteil (5) und den Kegelstumpfteilen (8, 9) angeordnet ist.

5. Verfahren zum Austausch eines Rohrteils eines einstückig ausgebildeten Rohrstranges,
nach einem der Ansprüche 1 bis 4 durch Auftrennen des Rohrstranges, Ansetzen eines neuen Rohrteils an den verbleibenden Rohrteil des Rohrstranges und gasdichtes Verbinden dieser beiden Rohrteile mittels einer Schelle,
**dadurch gekennzeichnet,**
daß der Rohrstrang (1) an einer Aufweitung (4) derart durchtrennt wird, daß der verbleibende Rohrteil (6) ein nach außen gerichtetes Endstück (10) aufweist, daß an dieses Endstück (10) ein sich nach außen verjüngender im Querschnitt trapezförmiger Dichtring (11) angesetzt wird, daß an diesen Dichtring (11) ein neues Rohrteil (12) mit einem zum Endstück (10) des verbleibenden Rohrteils (6) symmetrischen Endstück (13) angesetzt und daß auf die beiden Endstücke (10, 13) außen eine Schelle (14) aufgesetzt und verspannt wird.

6. Verfahren nach Anspruch 5,
**dadurch gekennzeichnet,**
daß der von den beiden Endstücken (10, 13) vor dem Verspannen eingeschlossene Winkel kleiner ist als der Keilwinkel des Dichtringes (11) und daß sich beim Verspannen dessen Keilflächen (15, 16) und die Endstücke (10, 13) flächenhaft aneinanderlegen.

7. Nach dem Verfahren des Anspruchs 5 oder 6 hergestellter Rohrstrang mit einem verbleibenden und einem neuen Rohrteil, wobei die beiden Rohrteile zwei zueinander geneigte Endstücke aufweisen, zwischen die ein trapezförmiger, sich nach außen verjüngender Dichtring eingesetzt ist, und daß eine Schelle die beiden Endstücke gegen den Dichtring verspannt,
**dadurch gekennzeichnet,**
daß der Dichtring (11) an seinem radial inneren Bereich seitlich zwei umlaufende Zentrierbunde (17, 18) aufweist, die an den Innenflächen der beiden Rohrteile (6, 12) im Fußbereich der Endstücke (10, 13) anliegen.

8. Rohrstrang nach Anspruch 7,
**dadurch gekennzeichnet,**
daß die beiden Rohrteile (6,12) im Fußbereich der Endstücke (10,13) derart aufgeweitet ausgebildet sind, daß der Betrag der Aufweitung etwa der Dicke der beiden Zentrierbunde (17,18) entspricht.

9. Rohrstrang nach Anspruch 7 oder 8,
**dadurch gekennzeichnet,**
daß Eindrückungen (19,20) im Fußbereich der beiden Endstücke (10,13) angeordnet sind, die in Ausnehmungen (21,22) in den Zentrierbunden (17,18) des Dichtringes (11) eingreifen.

## Claims

1. A pipeline (1) suitable for exchanging a pipe part and which can be pulled apart in order to isolate the pipe part (6, 7) which has to be changed, and with a connecting part (8, 9) adjacent the point of separation and having an obliquely outwardly directed surface, characterised in that the connecting part (8, 9) is part of a widening (4) of the pipeline and in that the pipeline is in one piece.

2. A pipeline according to claim 1, characterised in that the separation point is constructed as a point of weakness, particularly by the removal of material from the outer periphery of the pipeline.

3. A pipeline according to claim 1 or 2, characterised in that the outwardly directed part is constructed as a frustoconical part (8 or 9) at the greatest diameter of which the point of separation is disposed.

4. A pipe line according to one of claims 1 to 3, characterised in that the widening-out portion (4) consists of a cylindrical part (5) and, connecting this to the adjacent pipe parts (6, 7), two frustoconical parts (8, 9) and in that in each case one point of separation is disposed between the cylindrical part (5) and the frustoconical parts (8, 9).

5. A method of exchanging a pipe part in a pipeline constructed in one piece, according to one of claims 1 to 4, by opening up the pipeline, applying a fresh pipe part at the remaining part of the pipeline and in a gas-tight fashion connecting these two pipe parts by means of a clip, characterised in that the pipeline (1) is parted at a widened-out part (4) in such a way that the remaining pipe part (6) has an outwardly directed end portion (10) and in that there is applied to this end portion (10) an outwardly tapering cross-sectionally trapezoidal sealing ring (11) and in that there is applied against this sealing ring (11) a fresh pipe part (12) with an end portion (13) symmetrical with the end portion (10) of the remaining pipe part (6) and in that a clip (14) is fitted onto the outside of the two end portions (10, 13) and is tightened.

6. A method according to claim 5, characterised in that the angle enclosed by the two end portions (10, 13) prior to tightening is smaller than the wedge angle of the sealing ring (11) and in that during clamping the wedge-shaped surfaces (15, 16) and the end portions (10, 13) have their surfaces abutting one another.

7. A pipeline produced in accordance with the methods of claim 5 or 6, with a remaining pipe part and a new pipe part, the two pipe parts having two mutually inclined end portions between which is inserted a trapezoidal outwardly tapering sealing ring and in that a clip clamps the two end portions against the sealing ring, characterised in that on its radially inner portion, the sealing ring (11) has laterally two encircling centring collars (17, 18) which bear on the inner faces of the two pipe parts (6, 12) in the root area of the end portions (10, 13).

8. A pipeline according to claim 7, characterised in that the two pipe parts (6, 12) in the root area of the end portions (10, 13) are so widened out in their construction that the amount of the widening-out corresponds substantially to the thickness of the two centring shoulders (17, 18).

9. A pipeline according to claim 7 or 8, characterised in that indentations (19, 20) are disposed in the area of the roots of the two end portions (10, 13) and engage recesses (21, 22) in the centring shoulders (17, 18) of the sealing ring (11).

## Revendications

1. Tuyauterie (1) permettant le remplacement d'un tronçon de tuyau, qui peut être divisée pour détacher le tronçon de tuyau (6, 7) à remplacer et comporte une section de raccordement (8, 9) voisine du point de séparation et présentant une surface dirigée obliquement vers l'extérieur, caractérisée en ce que la section de raccordement (8, 9) fait partie d'un élargissement (4) de la tuyauterie et que la tuyauterie est d'un seul tenant.

2. Tuyauterie selon la revendication 1, caractérisée en ce que le point de détachement est réalisé comme un point destiné à la rupture, en particulier par enlèvement de matière à la périphérie extérieure de la tuyauterie.

3. Tuyauterie selon la revendication 1 ou 2, caractérisée en ce que la partie dirigée vers l'extérieur est réalisée comme une partie tronconique (8 ou 9) au plus grand diamètre duquel est disposé le point de détachement.

4. Tuyauterie selon une des revendications 1 à 3, caractérisée en ce que l'élargissement (4) est composé d'une partie cylindrique (5) et de deux parties tronconiques (8, 9) reliant celle-ci aux tronçons de tuyau (6, 7) qui s'y raccordent et qu'un point de détachement est disposé entre la partie cylindrique (5) et chacune des parties tronconiques (8, 9).

5. Procédé pour remplacer un tronçon de tuyau d'une tuyauterie d'un seul tenant, selon une des revendications 1 à 4, par division de la tuyauterie, adjonction d'un nouveau tronçon de tuyau au tronçon de tuyau restant de la tuyauterie et assemblage étanche au gaz de ces deux tronçons de tuyau au moyen d'un collier, caractérisé en ce que l'on divise la tuyauterie (1) au droit d'un élargissement (4) de manière que le tronçon de tuyau (6) restant présente un segment extrême (10) dirigé vers l'extérieur, que l'on adjoint à ce segment extrême (10) une bague d'étanchéité (11) de section droite trapézoïdale, se rétrécissant vers l'extérieur, que l'on adjoint à cette bague d'étanchéité (11) un nouveau tronçon de tuyau (12) portant un segment extrême (13) symétrique au segment extrême (10) du tronçon de tuyau (6) restant et que l'on dispose extérieurement sur les deux segments extrêmes (10, 13) un collier (14) à l'aide duquel on serre ces segments ensemble.

6. Procédé selon la revendication 5, caractérisé en ce que l'angle inclu par les deux segments extrêmes (10, 13) avant le serrage est plus petit que l'angle de coin de la bague d'étanchéité (11) et que, lors du serrage, les faces de coin (15, 16) de cette bague et les segments extrêmes (10, 13) s'appliquent à plat les uns contre les autres.

7. Tuyauterie produite selon le procédé de la revendication 5 ou 6, comportant un tronçon de tuyau restant et un nouveau tronçon de tuyau, les deux tronçons de tuyau présentant des segments extrêmes inclinés l'un vers l'autre et entre lesquels est placée une bague d'étanchéité trapézoïdale se rétrécissant vers l'extérieur, contre laquelle sont serrés les deux segments extrêmes à l'aide d'un collier, caractérisée en ce que la portion radialement intérieure de la bague d'étanchéité (11) présente latéralement deux collets de centrage (17, 18) faisant tout le tour et s'appliquant contre les surfaces intérieures des deux tronçons de tuyau (6, 12) dans la zone de base des segments extrêmes (10, 13).

8. Tuyauterie selon la revendication 7, caractérisée en ce que les deux tronçons de tuyau (6, 12) sont réalisés avec un élargissement tel, dans la zone de base des segments extrêmes (10, 13), que la cote d'élargissement correspond à peu près à l'épaisseur des deux collets de centrage (17, 18).

9. Tuyauterie selon la revendication 7 ou 8, caractérisée en ce que la zone de base des deux segments extrêmes (10, 13) présente des empreintes (19, 20) qui pénètrent dans des évidements (21, 22) des collets de centrage (17, 18) de la bague d'étanchéité (11).
